# EUROPÄISCHE PATENTSCHRIFT

(11) **EP 3 418 723 B1**
(45) Veröffentlichungstag und Bekanntmachung des Hinweises auf die Patenterteilung: **17.02.2021**
(21) Anmeldenummer: 17177573.7
(22) Anmeldetag: 23.06.2017
(51) Int. Cl.: G01N 21/05, G01N 35/10

(54) **PIPETTIERVORRICHTUNG MIT MEHRKANALIGEM VERTEILER ZUR SIMULTANEN EXTINKTIONSBESTIMMUNG**
PIPETTING DEVICE WITH MULTI-CHANNEL DISTRIBUTOR FOR SIMULTANEOUS EXTINCTION DETECTION
DISPOSITIF DE PIPETTAGE COMPRENANT UN DISTRIBUTEUR À PLUSIEURS CANAUX DESTINÉ À LA DÉTERMINATION D'EXTINCTION SIMULTANÉE

(43) Veröffentlichungstag der Anmeldung: 26.12.2018
(73) Patentinhaber: Siemens Healthcare Diagnostics Products GmbH, 35041 Marburg (DE)
(72) Erfinder: KALBFELL, Heiko, 65232 Taunusstein (DE); WIEDEKIND-KLEIN, Alexander, 56812 Cochem (DE)

(56) Entgegenhaltungen:
- EP-A2- 0 958 862
- WO-A1-97/07391
- US-A- 4 359 447

## Beschreibung

Die Erfindung liegt auf dem Gebiet der automatischen Analysegeräte und betrifft eine Pipettiervorrichtung für ein automatisches Analysegerät sowie ein Verfahren zur simultanen Bestimmung der Extinktion einer Flüssigprobe bei mehreren Wellenlängen in der Pipettiervorrichtung.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen, in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß zu einem Testansatz vermischt wird, wodurch eine biochemische Reaktion in Gang gesetzt wird, die eine messbare Veränderung einer optischen Eigenschaft des Reaktionsansatzes bewirkt. Die Photometrie untersucht und nutzt die Schwächung eines Lichtstroms beim Durchtritt durch ein absorbierendes und/oder streuendes Medium. Je nach Art der ausgelösten biochemischen oder biophysikalischen Reaktion kommen unterschiedliche photometrische Messverfahren zum Einsatz, die die Messung eines trüben flüssigen Testansatzes ermöglichen.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Ein Analysegerät weist mindestens eine Messeinheit zur optischen Analyse der Testansätze auf. Ein Testansatz ist ein Gemisch aus der zu analysierenden Primärprobe und einem oder mehreren Nachweisreagenzien, die für den Nachweis des zu bestimmenden Analyten benötigt werden. Die Testansätze werden üblicherweise bereit gestellt, indem mittels einer oder mehrerer Pipettiervorrichtungen ein Volumen einer Primärprobe und ein Volumen einer Reagenzflüssigkeit in eine Messzelle abgegeben wird.

Einige moderne Analysegeräte, insbesondere solche auf dem Gebiet der in vitro-Diagnostik humaner oder tierischer Körperflüssigkeitsproben, weisen neben der ersten, analytischen Messeinheit zur optischen Analyse der Testansätze zusätzlich eine zweite, präanalytische Messeinheit zur optischen Analyse der Primärproben auf. Die präanalytische Messeinheit hat den Zweck, die Körperflüssigkeitsproben dahingehend zu analysieren, ob die Extinktion der Körperflüssigkeitsprobe als solcher bei bestimmten Wellenlängen Grenzwerte übersteigt und damit das Risiko einer Fehlbestimmung des Analyten besteht. Körperflüssigkeitsproben können in Einzelfällen abnormal hohe Konzentrationen einer oder mehrerer intrinsischer, also körpereigener Substanzen enthalten, die sich bei Überschreitung einer tolerablen Konzentration in photometrischen Detektionsverfahren als störend erweisen und sich zu einem systematischen Fehler auswirken können. Probleme bereiten bekanntermaßen hämolytische, ikterische und/oder lipämische Serum- oder Plasmaproben, die über abnormal hohe Hämoglobin-, Bilirubin- und/oder Lipid-Konzentrationen verfügen. Abnormal hohe Konzentrationen dieser interferierenden Substanzen können durch einen pathologischen Zustand des Patienten oder aber durch eine unsachgemäße Probengewinnung oder -lagerung verursacht werden. Werden Testansätze solcher Primärproben einem photometrischen Verfahren unterworfen, das der Bestimmung eines analytischen, diagnostisch relevanten Parameters dient, besteht die Gefahr einer Fehlbestimmung, die gegebenenfalls eine Fehldiagnose und schlimmstenfalls eine Fehlbehandlung des Patienten zur Folge haben kann. Die präanalytische Identifikation hämolytischer, ikterischer sowie lipämischer Proben ist also zur Vermeidung von fehlerhaften Analyseergebnissen von besonderer Wichtigkeit. Nichtsdestotrotz soll die präanalytische Analyse keine wesentliche Verzögerung der Gesamtbearbeitungszeit einer Probe verursachen und möglichst wenig Probenmaterial benötigen.

Es sind Analysegeräte bekannt, in denen die präanalytische optische Analyse der Primärproben in der Pipettiervorrichtung durchgeführt wird. In US-A-5734468 wird eine Pipettiervorrichtung mit einer Pipettiernadel, mit einer mit der Pipettiernadel verbundenen Dosierpumpe und mit einer photometrischen Messvorrichtung zur Messung der Extinktion einer von der Pipettiernadel aufgenommenen Fluidprobe beschrieben. Die Pipettiernadel weist einen transparenten Abschnitt aus Borosilikatglas auf, an dem eine photometrische Messeinheit angebracht ist. Es wird ein Volumen der Primärprobe mit Hilfe der Pipettiernadel aus dem Primärprobengefäß angesaugt, und mit der an der Pipettiernadel angebrachten photometrischen Messeinheit wird die Extinktion der Primärprobe bestimmt. Die photometrische Messeinheit weist mehrere LED's zur Erzeugung von Licht unterschiedlicher Wellenlängen auf. Die Messungen der Extinktionen der Probe bei den verschiedenen Wellenlängen erfolgen nacheinander.

Die sequenzielle Messung ist jedoch nachteilig, da sie verhältnismäßig lange dauert.

EP 0 958 862 A2 beschreibt eine Pipettiervorrichtung mit einem mehrkanaligen Verteiler.

Der vorliegenden Erfindung liegt die Aufgabe zugrunde, eine Pipettiervorrichtung zur Messung der Extinktion einer von der Pipettiernadel aufgenommenen Fluidprobe bereit zu stellen, die eine simultane und damit schnellere Messung der Extinktion der Probe bei mehreren Wellenlängen ermöglicht.

Die Aufgabe wird dadurch gelöst, dass die Verbindung, die zwischen Pipettiernadel und Dosierpumpe vorgesehen ist, einen mehrkanaligen Verteiler aufweist, wobei an jedem Kanal des Verteilers eine photometrische Messvorrichtung vorgesehen ist.

Gegenstand der vorliegenden Erfindung ist also eine Pipettiervorrichtung mit einer Pipettiernadel und mit einer mit der Pipettiernadel verbundenen Dosierpumpe, wobei die Verbindung zwischen Pipettiernadel und Dosierpumpe einen mehrkanaligen Verteiler aufweist und wobei an jedem Kanal des Verteilers eine photometrische Messvorrichtung vorgesehen ist.

Dies ermöglicht die simultane Messung der Extinktion einer von der Pipettiernadel aufgenommenen Fluidprobe und damit eine schnellere Messung der Extinktion der Probe bei mehreren Wellenlängen.

Der mehrkanalige Verteiler umfasst zwei, drei, vier, fünf oder mehr Kanäle. Die Anzahl wird sich praktischerweise nach der Anzahl der unterschiedlichen Wellenlängen richten, die zur Extinktionsmessung verwendet werden sollen.

An der Pipettiernadel und an der Dosierpumpe ist jeweils ein einkanaliger Anschluss vorgesehen, der jeweils in den mehrkanaligen Verteiler mündet. Dies stellt den präzisen Fluidtransfer sicher.

Die Summe der Querschnittsflächen aller Kanäle des mehrkanaligen Verteilers entspricht jeweils der Querschnittsfläche des einkanaligen Anschlusses zur Pipettiernadel hin und des einkanaligen Anschlusses zur Dosierpumpe hin. Dadurch wird sichergestellt, dass ein Abbruch des Volumenstroms und somit die Entstehung unerwünschter Luftblasen vermieden wird, wenn sich beim Einsaugen von Flüssigkeit der Volumenstrom in die verschiedenen Kanäle aufteilt. Idealerweise weisen alle Kanäle des mehrkanaligen Verteilers dieselbe Querschnittsfläche und auch dieselbe Querschnittsform auf.

Der mehrkanalige Verteiler besteht vorzugsweise zumindest teilweise aus einem lichtdurchlässigen Material, beispielsweise aus Glas oder Kunststoff.

Vorzugsweise umfasst jede photometrische Messvorrichtung eine Lichtquelle, z.B. eine LED (Licht emittierende Diode), und einen Lichtdetektor, wobei die Lichtquellen Licht unterschiedlicher Wellenlängen produzieren.

Vorzugsweise weist jeder Kanal des mehrkanaligen Verteilers zumindest in dem Bereich, an dem die photometrische Messvorrichtung vorgesehen ist, parallele Seitenwände auf. Dies verbessert die optischen Messergebnisse und erlaubt den Verzicht auf Linsen oder andere optische Einrichtungen.

Ein weiterer Gegenstand der vorliegenden Erfindung ist die Verwendung einer erfindungsgemäßen Pipettiervorrichtung zur simultanen Bestimmung der Extinktion einer Flüssigprobe bei mehreren Wellenlängen.

Eine besonders bevorzugte Verwendung ist die simultane Bestimmung der Extinktion einer Plasma- oder Serumprobe bei mehreren Wellenlängen zur Detektion von Hämolyse, Ikterus und Lipiden. Auf diese Weise kann vor der eigentlichen Analyse der Probe, also präanalytisch, ermittelt werden, ob in der Probe Störfaktoren enthalten sind, die die nachfolgende optische Analyse eines Testansatzes beeinflussen könnten.

Ein weiterer Gegenstand der vorliegenden Erfindung ist ein automatisches Analysegerät mit einer erfindungsgemäßen Pipettiervorrichtung und mit einer Steuerung, die so konfiguriert ist, dass sie ein Verfahren mit den folgenden Schritten steuert:
- Eintauchen der Pipettiernadel in eine Flüssigprobe;
- Betätigen der Dosierpumpe zur Aufnahme eines definierten Volumens der Flüssigprobe, so dass die Probe in den mehrkanaligen Verteiler gelangt;
- Messen der Extinktion der Flüssigprobe in jedem Kanal des mehrkanaligen Verteilers; und
- Betätigen der Dosierpumpe zur Abgabe des aufgenommenen Volumens der Flüssigprobe.

Die Messung der Extinktion der Flüssigprobe in den verschiedenen Kanälen des mehrkanaligen Verteilers erfolgt vorzugsweise gleichzeitig.

In einer bevorzugten Ausführungsform des automatischen Analysegerätes ist die Pipettiervorrichtung an einem horizontal bewegbaren Transferarm befestigt, und die Steuerung ist ferner so konfiguriert, dass die Extinktionsmessungen während eines horizontalen Transfers der Pipettiervorrichtung durchgeführt werden. Auf diese Weise wird die Zeit, die ohnehin benötigt wird, um die aufgenommene Flüssigprobe zu einem gewünschten Abgabeort zu transportieren, genutzt, um gleichzeitig auch die präanalytischen Extinktionsmessungen vorzunehmen. Dies erhöht den Durchsatz des automatischen Analysegerätes.

Bevorzugterweise ist die Flüssigprobe eine Plasma- oder Serumprobe, und die Extinktionsmessungen werden zur Detektion von Hämolyse, Ikterus und Lipiden durchgeführt. Im Stand der Technik sind unterschiedliche Methoden zur Detektion von Hämolyse, Ikterus und Lipiden bekannt. Typischerweise werden die Proben bei drei bis fünf verschiedenen Wellenlängen gemessen und die Messergebnisse anschließend ausgewertet (siehe z.B. EP-A2-3051272).

Die Erfindung wird im Folgenden anhand einer Zeichnung erläutert.

Darin zeigen
- FIG. 1: ein erfindungsgemäßes automatisches Analysegerät 1;
- FIG. 2: eine erfindungsgemäße Pipettiervorrichtung 3.

Gleiche Teile sind in allen Figuren mit denselben Bezugszeichen versehen.

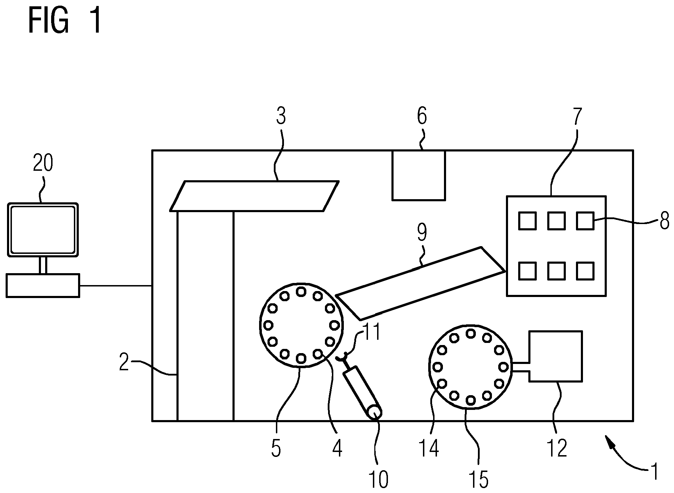

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

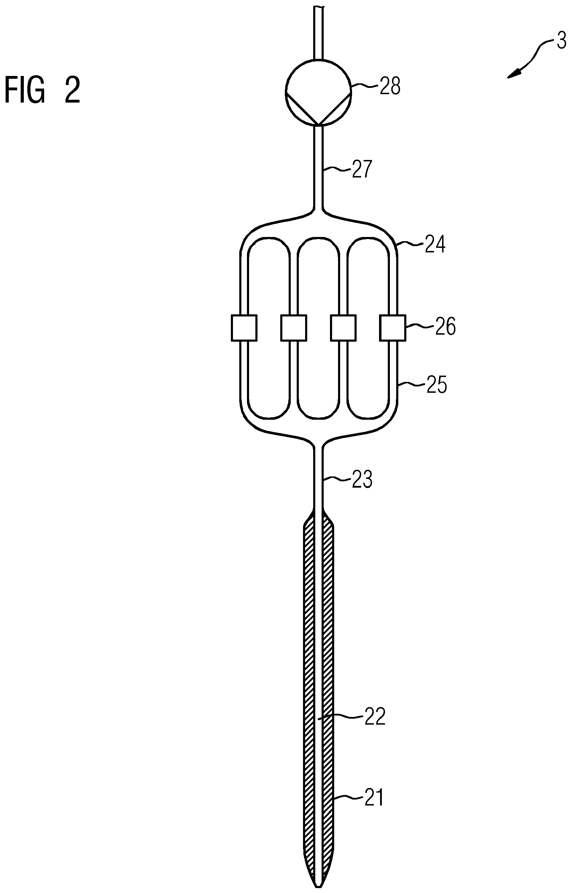

Die Patientenproben (Primärproben) werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer an einem Transferarm befestigten ersten Pipettiervorrichtung 3 Probenaliquots mittels einer Pipettiernadel entnommen. Die in FIG. 2 näher gezeigte Pipettiervorrichtung 3 misst die Extinktion der aufgenommenen Probe bei vier verschiedenen Wellenlängen, und eine nicht näher dargestellte Auswerteeinheit bestimmt, ob die Probe hämolytisch oder ikterisch ist oder Lipide enthält. Wird festgestellt, dass die Probe eine Störsubstanz enthält, wird die Pipettiervorrichtung 3 zu einer Abfallstation 6 verfahren, wo das Probenaliquot in ein Abfallgefäß abgegeben wird. Wird festgestellt, dass die Probe keine Störsubstanz enthält, wird die Pipettiervorrichtung 3 zu einer drehbaren, auf 37 °C temperierten Inkubationseinrichtung 5 verfahren, wo das Probenaliquot in eine ebenfalls nicht näher dargestellte Küvette abgegeben wird, die in einer Aufnahmepositionen 4 der Inkubationseinrichtung 5 angeordnet ist. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in die Küvette, die bereits das Probenaliquot enthält, abgegeben. Die Küvette mit dem Testansatz wird von einem Transferarm 10 mit einem Klemmgreifer 11 von der Inkubationseinrichtung 5 in eine Aufnahmeposition 14 der drehbaren Aufnahmevorrichtung 15 für die photometrische Messstation 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 ist eine schematische Darstellung einer erfindungsgemäßen Pipettiervorrichtung 3. Die Pipettiervorrichtung 3 umfasst eine Pipettiernadel 21 mit einem Hohlkanal 22. Am oberen Ende der Pipettiernadel 21 ist ein einkanaliger Anschluss 23 vorgesehen, der in einen 4-kanaligen Verteiler 24 mündet. An jedem Kanal 25 des Verteilers 24 ist eine photometrische Messvorrichtung 26 angebracht, die jeweils eine LED und einen Lichtdetektor umfasst. Auf der der Pipettiernadel 21 gegenüberliegenden Seite münden die Kanäle 25 des Verteilers 24 in einen einkanaligen Anschluss 27, der eine Verbindung zu der Dosierpumpe 28 herstellt.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Abfallstation
- 7: Reagenzgefäßvorratsbehälter
- 8: Reagenzgefäß
- 9: Pipettiervorrichtung
- 10: Transferarm
- 11: Klemmgreifer
- 12: Messstation
- 14: Aufnahmeposition
- 15: Aufnahmevorrichtung
- 20: Steuereinheit

- 21: Pipettiernadel
- 22: Hohlkanal
- 23: Anschluss
- 24: Verteiler
- 25: Kanal
- 26: photometrische Messvorrichtung
- 27: Anschluss
- 28: Dosierpumpe

## Patentansprüche

1. Pipettiervorrichtung (3) mit einer Pipettiernadel (21) und mit einer mit der Pipettiernadel (21) verbundenen Dosierpumpe (28), wobei die Verbindung zwischen Pipettiernadel (21) und Dosierpumpe (28) einen mehrkanaligen Verteiler (24) aufweist und wobei der mehrkanalige Verteiler (24) zwei, drei, vier, fünf oder mehr Kanäle (25) umfasst, wobei an der Pipettiernadel (21) und an der Dosierpumpe (28) jeweils ein einkanaliger Anschluss (23, 27) vorgesehen ist, der jeweils in den mehrkanaligen Verteiler (24) mündet, **dadurch gekennzeichnet, dass** an jedem Kanal (25) des Verteilers (24) eine photometrische Messvorrichtung (26) vorgesehen ist, wobei die Summe der Querschnittsflächen aller Kanäle des mehrkanaligen Verteilers jeweils der Querschnittsfläche eines einkanaligen Anschlusses zur Pipettiernadel hin und eines einkanaligen Anschlusses zur Dosierpumpe hin entspricht.

2. Pipettiervorrichtung (3) gemäß Anspruch 1, wobei der mehrkanalige Verteiler (24) zumindest teilweise aus einem lichtdurchlässigen Material besteht.

3. Pipettiervorrichtung (3) gemäß Anspruch 2, wobei jede photometrische Messvorrichtung (26) eine Lichtquelle und einen Lichtdetektor umfasst und wobei die Lichtquellen Licht unterschiedlicher Wellenlängen produzieren.

4. Pipettiervorrichtung (3) gemäß einem der Ansprüche 2 und 3, wobei jeder Kanal (25) des mehrkanaligen Verteilers (24) zumindest in dem Bereich, an dem die photometrische Messvorrichtung (26) vorgesehen ist, parallele Seitenwände aufweist.

5. Verwendung einer Pipettiervorrichtung (3) gemäß einem der Ansprüche 1 bis 4 zur simultanen Bestimmung der Extinktion einer Flüssigprobe bei mehreren Wellenlängen.

6. Verwendung gemäß Anspruch 5 zur simultanen Bestimmung der Extinktion einer Plasma- oder Serumprobe bei mehreren Wellenlängen zur Detektion von Hämolyse, Ikterus und Lipiden.

7. Automatisches Analysegerät (1) mit einer Pipettiervorrichtung (3) gemäß einem der Ansprüche 1 bis 4 und mit einer Steuerung, die so konfiguriert ist, dass sie ein Verfahren mit den folgenden Schritten steuert:
• Eintauchen der Pipettiernadel (21) in eine Flüssigprobe;
• Betätigen der Dosierpumpe (28) zur Aufnahme eines definierten Volumens der Flüssigprobe, so dass die Probe in den mehrkanaligen Verteiler (24) gelangt;
• Messen der Extinktion der Flüssigprobe in jedem Kanal (25) des mehrkanaligen Verteilers (24); und
• Betätigen der Dosierpumpe (28) zur Abgabe des aufgenommenen Volumens der Flüssigprobe.

8. Automatisches Analysegerät (1) gemäß Anspruch 7, wobei die Pipettiervorrichtung (3) an einem horizontal bewegbaren Transferarm befestigt ist und die Steuerung, ferner so konfiguriert ist, dass die Extinktionsmessungen während eines horizontalen Transfers der Pipettiervorrichtung (3) durchgeführt werden.

9. Automatisches Analysegerät (1) gemäß einem der Ansprüche 7 und 8, wobei die Flüssigprobe eine Plasma- oder Serumprobe ist und die Extinktionsmessungen zur Detektion von Hämolyse, Ikterus und Lipiden durchgeführt werden.

## Claims

1. Pipetting device (3) with a pipetting needle (21) and with a metering pump (28) connected to the pipetting needle (21), wherein the connection between pipetting needle (21) and metering pump (28) has a multi-channel distributor (24), and wherein the multi-channel distributor (24) comprises two, three, four, five or more channels (25), wherein a single-channel attachment (23, 27) is provided on the pipetting needle (21) and on the metering pump (28) respectively, said single-channel attachment (23, 27) opening in each case into the multi-channel distributor (24), **characterized in that** a photometric measuring device (26) is provided on each channel (25) of the distributor (24), wherein the sum of the cross-sectional areas of all of the channels of the multi-channel distributor corresponds in each case to the cross-sectional area of a single-channel attachment towards the pipetting needle and of a single-channel attachment towards the metering pump.

2. Pipetting device (3) according to Claim 1, wherein the multi-channel distributor (24) is made at least partially of a transparent material.

3. Pipetting device (3) according to Claim 2, wherein each photometric measuring device (26) comprises a light source and a light detector, and wherein the light sources produce light of different wavelengths.

4. Pipetting device (3) according to either of Claims 2 and 3, wherein each channel (25) of the multi-channel distributor (24) has parallel side walls, at least in the region at which the photometric measuring device (26) is provided.

5. Use of a pipetting device (3) according to one of Claims 1 to 4 for simultaneously determining the extinction of a liquid sample at a plurality of wavelengths.

6. Use according to Claim 5 for simultaneously determining the extinction of a plasma or serum sample at a plurality of wavelengths in order to detect haemolysis, jaundice and lipids.

7. Automatic analysis appliance (1) having a pipetting device (3) according to one of Claims 1 to 4, and having a control system which is configured such that it controls a method having the following steps:
• immersion of the pipetting needle (21) into a liquid sample;
• actuation of the metering pump (28) for receiving a defined volume of the liquid sample, such that the sample enters the multi-channel distributor (24);
• measurement of the extinction of the liquid sample in each channel (25) of the multi-channel distributor (24); and
• actuation of the metering pump (28) in order to dispense the received volume of the liquid sample.

8. Automatic analysis appliance (1) according to Claim 7, wherein the pipetting device (3) is secured on a horizontally movable transfer arm, and the control system is further configured such that the extinction measurements are performed during a horizontal transfer of the pipetting device (3).

9. Automatic analysis appliance (1) according to either of Claims 7 and 8, wherein the liquid sample is a plasma or serum sample, and the extinction measurements are performed in order to detect haemolysis, jaundice and lipids.

## Revendications

1. Dispositif (3) de pipettage, comprenant une aiguille (21) de pipettage et une pompe (28) doseuse communiquant avec l'aiguille (21) de pipettage, la communication entre l'aiguille (21) de pipettage et la pompe (28) doseuse ayant un répartiteur (24) à plusieurs canaux et le répartiteur (24) à plusieurs canaux comprenant deux, trois, quatre, cinq ou six canaux (25), dans lequel il est prévu sur l'aiguille (21) de pipettage et sur la pompe (28) doseuse respectivement un raccord (23, 27) à un seul canal, qui débouche respectivement dans le répartiteur (24) à plusieurs canaux, **caractérisé en ce qu'**il est prévu sur chaque canal (25) du répartiteur (24) un dispositif (26) de mesure photométrique, la somme des surfaces de section transversale de tous les canaux du répartiteur à plusieurs canaux correspondant respectivement à la surface de section transversale d'un raccord à un seul canal allant à l'aiguille de pipettage et d'un raccord à un seul canal allant à la pompe doseuse.

2. Dispositif (3) de pipettage suivant la revendication 1, dans lequel le répartiteur (24) à plusieurs canaux est, au moins en partie, en un matériau transparent.

3. Dispositif (3) de pipettage suivant la revendication 2, dans lequel chaque dispositif (26) de mesure photométrique comprend une source lumineuse et un détecteur de lumière et dans lequel les sources lumineuses produisent de la lumière de longueurs d'onde différentes.

4. Dispositif (3) de pipettage suivant les revendications 2 et 3, dans lequel chaque canal (25) du répartiteur (24) à plusieurs canaux a, au moins dans la partie où le dispositif (26) de mesure photométrique est prévu, des parois latérales parallèles.

5. Utilisation d'un dispositif (3) de pipettage sur l'une des revendications 1 à 4, pour la détermination simultanée de l'extinction d'un échantillon liquide à plusieurs longueurs d'onde.

6. Utilisation suivant la revendication 5, pour la détermination simultanée de l'extinction d'un échantillon de plasma ou de sérum, pour la détection d'une hémolyse, d'un ictère et des lipides.

7. Appareil (1) d'analyse automatique comprenant un dispositif (3) de pipettage suivant l'une des revendications 1 à 4, et comprenant une commande qui est configurée de manière à commander un procédé ayant les stades suivants :
• plongée de l'aiguille (21) de pipettage dans un échantillon liquide;
• actionnement de la pompe (28) doseuse pour la prise d'un volume défini de l'échantillon liquide de manière à ce que l'échantillon arrive dans le répartiteur (24) à plusieurs canaux;
• mesure de l'extinction de l'échantillon liquide dans chaque canal (25) du répartiteur (24) à plusieurs canaux et
• actionnement de la pompe (28) doseuse pour céder le volume pris de l'échantillon liquide.

8. Appareil (1) d'analyse automatique suivant la revendication 7, dans lequel le dispositif (3) de pipettage est fixé à un bras de transfert mobile horizontalement et la commande est en outre configurée de manière à effectuer les mesures d'extinction pendant un transfert horizontal du dispositif (3) de pipettage.

9. Appareil (1) d'analyse automatique suivant l'une des revendications 7 et 8, dans lequel l'échantillon liquide est un échantillon de plasma ou de sérum et on effectue les mesures d'extinction pour la détection d'une hémolyse, d'un ictère et des lipides.
